# EUROPÄISCHE PATENTANMELDUNG

(11) **EP 4 814 279 A1**
(43) Veröffentlichungstag der Anmeldung: **30.09.2026**
(21) Anmeldenummer: 25000033.8
(22) Anmeldetag: 26.03.2025
(51) Int. Cl.: F02C 3/30, F02C 7/224

(54) **GASTURBINENSYSTEM MIT WASSEREINLEITUNG, INSBESONDERE FÜR EINEN NIEDRIGTEMPERATURBETRIEB, SOWIE VERFAHREN ZUM BETREIBEN EINES GASTURBINENSYSTEMS**

(71) Anmelder: Broda, Nicolas, Michael, 35685 Dillenburg-Manderbach (DE); Arndt, Holger, 35578 Wetzlar (DE)
(72) Erfinder: Broda, Nicolas, Michael, 35685 Dillenburg-Manderbach (DE); Arndt, Holger, 35578 Wetzlar (DE)

(57) **Zusammenfassung**

Ein Gasturbinensystem (100) umfasst eine Gasturbine (102). Die Gasturbine (102) umfasst wenigstens ein Turbinenrad (152); wenigstens eine Brennkammer (120), die zum Verbrennen eines Treibstoff-Luft-Gemischs in der Brennkammer vorgesehen ist und die mit dem Turbinenrad (152) fluidisch verbunden ist zum Leiten eines Gasstroms aus der Brennkammer (120) zu dem Turbinenrad (152); und, eine Wassereinleitvorrichtung (140, 142, 144), die dazu ausgebildet ist, dem Gasstrom Wasser hinzuzufügen. Das Gasturbinensystem (100) umfasst ferner eine Steuerungseinheit (190), die dazu ausgebildet ist, eine Wassermenge zu steuern, die dem Gasstrom mittels der Wassereinleitvorrichtung (140, 142, 144) hinzugefügt wird. Die Wassereinleitvorrichtung (140, 142, 144) ist ferner dazu ausgebildet, unter Verwenden einer in dem Gasturbinensystem (100) verfügbaren Wärmemenge wenigstens einen Teil der Wassermenge vorzuwärmen, bevor die Wassermenge dem Gasstrom hinzugefügt wird. Die Steuerungseinheit (190) ist ferner dazu ausgebildet, die Wassereinleitvorrichtung (140, 142, 144) so zu steuern, dass ein Vorwärmen wenigstens des Teils der Wassermenge optimiert ist unter der Maßgabe, dass ein höchster Wirkungsgrad der Gasturbine (102) erzielbar ist, wenn die verfügbare Wärmemenge zum Verdampfen eines möglichst großen Anteils der Wassermenge verwendet wird und ein Rest der verfügbaren Wärmemenge zum Vorwärmen eines restlichen Anteils der Wassermenge und/oder des Treibstoffs für die Gasturbine (102) verwendet wird.

## Beschreibung

Die Erfindung betrifft ein Gasturbinensystem mit Wassereinleitung gemäß dem Oberbegriff des Anspruchs 1. Die Erfindung betrifft ferner ein Verfahren zum Betreiben eines Gasturbinensystems und ein Computerprogrammprodukt.

Gasturbinen sind bekannt, bei denen während eines Betriebs dem Gasstrom in der Gasturbine Wasser zugeführt werden kann, bevor der Gasstrom ein oder mehrere Turbinenräder der Gasturbine passiert, um diese anzutreiben. Eine Wasserzuführung erfolgt dabei beispielsweise ausgangsseitig in einer Brennkammer der Gasturbine. Aufgrund des zugeführten Wassers ist ein Massestrom, der zum Antrieb der Turbinenräder beiträgt, erhöht. Eine Temperatur des Gasstroms ist wegen des zugeführten Wassers verringert.

In der DE 10 2021 005 758 A1 der Anmelder ist ein Gasturbinensystem beschrieben, das dazu ausgebildet ist, dem Gasstrom Wasser hinzuzufügen. Eine Steuerungseinheit des Gasturbinensystems ist dazu ausgebildet, eine Wassermenge zu steuern, die dem Gasstrom mittels einer Wassereinspritzanordnung des Gasturbinensystems vor dem Passieren der Gasturbine hinzugefügt wird. Das Wasser wird vor dem Zuführen zu dem Gasstrom vorgewärmt, beispielsweise verdampft. Durch die Wassermenge wird ein Massestrom durch die Turbine erhöht, wobei zugleich eine Temperatur des Gasstroms in geringerem Umfang abnimmt, als es bei einem Zuführen von nicht vorgewärmtem Wasser derselben Menge der Fall wäre. Damit ergibt sich eine größere Abgaswärme des Gasturbinensystems, wodurch wiederum die Verwendung der Abgaswärme zum Vorwärmen des Wassers, möglicherweise zusätzlich oder alternativ zu anderen Wärmequellen, thermodynamisch begünstigt ist. In dem Zusammenhang ist in der DE 10 2021 005 758 A1 beschrieben, dass ein Wirkungsgrad des Gasturbinensystems besonders begünstigt ist, wenn die zugeführte Wassermenge nicht größer ist als eine größte Menge, die sich mittels der jeweils zurückgewonnenen Abgaswärme verdampfen lässt.

Es gibt jedoch Anwendungsszenarien für Gasturbinensysteme, in denen es vorteilhaft oder erforderlich wäre, wesentliche Teile der Gasturbine aus Materialien zu fertigen, die kostengünstig beschaffbar sind, wie zum Beispiel einfache Stähle ("Baustahl"), oder die aufgrund einer geringen Dichte eine starke Beschleunigung des Turbinenrads und damit ein schnelles Reagieren auf Lastveränderungen ermöglichen, wie zum Beispiel Aluminium. Derartige Materialien halten typischen Verbrennungstemperaturen oft nicht stand und bewirken daher eine begrenzte kritische Temperatur der Gasturbine insgesamt. Ähnliches gilt bei vielen Materialien, wenn vorgesehen ist, die Gasturbine mit einem luftarmen (sog. "fetten") Treibstoff-Luft-Gemisch zu betreiben, da ein geringerer Luftanteil im Gasstrom eine verringerte Kühlung der Gasturbine bewirkt.

In vielen Fällen kann es daher erforderlich sein, dem Gasstrom zum Kühlen eine Wassermenge zuzuführen, die größer ist als eine Wassermenge, die sich mittels rückgewinnbarer Abgaswärme der Gasturbine hinreichend stark vorwärmen lässt, um die zugeführte Wassermenge zu verdampfen.

Vor diesem Hintergrund besteht das der Erfindung zugrunde liegende Problem in der Schaffung eines Gasturbinensystems mit niedriger Betriebstemperatur und hohem Wirkungsgrad.

Das Problem wird gelöst durch ein Gasturbinensystem gemäß Anspruch 1, ein Verfahren gemäß Anspruch 13 und ein Computerprogrammprodukt gemäß Anspruch 14. Weiterbildungen der Erfindung sind in den abhängigen Ansprüchen angegeben.

Gemäß einem ersten Aspekt wird ein Gasturbinensystem vorgestellt. Das Gasturbinensystem umfasst eine Gasturbine. Die Gasturbine umfasst wenigstens ein Turbinenrad; wenigstens eine Brennkammer, die zum Verbrennen eines Treibstoff-Luft-Gemischs in der Brennkammer vorgesehen ist und die mit dem Turbinenrad fluidisch verbunden ist zum Leiten eines Gasstroms aus der Brennkammer zu dem Turbinenrad, und eine Wassereinleitvorrichtung, die dazu ausgebildet ist, dem Gasstrom Wasser hinzuzufügen. Das Gasturbinensystem umfasst außerdem eine Steuerungseinheit, die dazu ausgebildet ist, eine Wassermenge zu steuern, die dem Gasstrom mittels der Wassereinleitvorrichtung hinzugefügt wird. Die Wassereinleitvorrichtung ist ferner dazu ausgebildet, unter Verwenden einer in dem Gasturbinensystem verfügbaren Wärmemenge wenigstens einen Teil der Wassermenge vorzuwärmen, bevor die Wassermenge dem Gasstrom hinzugefügt wird. Die Steuerungseinheit ist ferner dazu ausgebildet, die Wassereinleitvorrichtung so zu steuern, dass ein Vorwärmen wenigstens des Teils der Wassermenge optimiert ist unter der Maßgabe, dass ein höchster Wirkungsgrad der Gasturbine erzielbar ist, wenn die verfügbare Wärmemenge zum Verdampfen eines möglichst großen Anteils der Wassermenge verwendet wird und ein Rest der verfügbaren Wärmemenge zum Vorwärmen eines restlichen Anteils der Wassermenge und/oder des Treibstoffs für die Gasturbine verwendet wird.

Das Vorwärmen wenigstens des Teils der Wassermenge kann optimiert sein unter der zusätzlichen Maßgabe, dass der höchste Wirkungsgrad der Gasturbine erzielbar ist, wenn der Rest der verfügbaren Wärmemenge nur dann zum Vorwärmen des Treibstoffs für die Gasturbine verwendet wird, wenn ein restlicher Anteil der Wassermenge nicht vorliegt.

Die verfügbare Wärmemenge kann wenigstens teilweise, insbesondere vollständig, aus rückgewinnbarer und/oder rückgewonnener Abgaswärme der Gasturbine bestehen.

Die Gasturbine kann dazu ausgebildet sein, in wenigstens einer vorgesehenen Betriebsart mit einem, insbesondere wenigstens annähernd stöchiometrischen, Treibstoff-Luft-Gemisch betrieben zu werden, das so beschaffen ist, dass der dadurch erzeugte Gasstrom eine Temperatur aufweist, die geeignet ist, im Bereich des Turbinenrads eine Temperatur zu verursachen, die größer ist als eine kritische Temperatur des Turbinenrads. Dabei kann die Steuerungseinheit dazu ausgebildet sein, die Wassermenge derart zu steuern, dass eine Temperatur des dadurch erzeugten Wasser-Gasgemischs im Bereich des Turbinenrads kleiner ist als die kritische Temperatur des Turbinenrads. Das zumindest annähernd stöchiometrische Treibstoff-Luft-Gemisch kann so beschaffen sein, dass der Masseanteil jedweder Komponente des Gemischs um höchstens 50%, vorzugsweise höchstens 30%, bevorzugt höchstens 15%, besonders bevorzugt höchstens 5% von einem stöchiometrischen Masseanteil der jeweiligen Komponente abweicht.

Ein Wassereinleitbereich der Wassereinleitvorrichtung kann in Bezug auf die Brennkammer derart angeordnet sein, dass der Gasstrom in dem Wassereinleitbereich wenigstens annähernd keine brennenden Anteile des Treibstoff-Luft-Gemischs mehr enthält. Bei vorgesehenen Betriebszuständen der Gasturbine kann dabei ein Brennvorgang zu wenigstens 60%, bevorzugt zu wenigstens 80%, bevorzugt zu wenigstens 90%, bevorzugt zu wenigstens 95% abgeschlossen sein, bevor der sich daraus ergebende (Rauch-)Gasstrom in den Wassereinleitbereich eintritt. Abschluss des Brennvorgangs kann dann vorliegen, wenn sämtliche bei dem Brennprozess umsetzbaren Treibstoffanteile im Gasstrom umgesetzt sind. Dabei können die voranstehenden Werte für den Fortschritt des Brennprozesses in Bezug auf eine bei dem Brennprozess insgesamt umzusetzende Treibstoffmenge gelten. Alternativ können die voranstehenden Werte für den Fortschritt des Brennprozesses in Bezug auf eine bei dem Brennprozess in jedem von mehreren Teilströmen des Gasstroms umzusetzende Treibstoffmenge gelten. Dabei können verschiedene Teilströme verschiedenen Bereichen eines Querschnittsprofils des Gasstroms entsprechen.

Das Gasturbinensystem kann ferner wenigstens einen Sensor umfassen, der dazu ausgebildet ist, wenigstens eine Messgröße zu erfassen, die auf die in dem Gasturbinensystem verfügbare Wärmemenge, insbesondere eine rückgewonnene und/oder rückgewinnbare Abgaswärme der Gasturbine, hinweist. Dabei kann die Steuerungseinheit ferner dazu ausgebildet sein, einen zum Verdampfen vorgesehenen Anteil der Wassermenge wenigstens teilweise auf der Grundlage der erfassten Messgröße, die auf die verfügbare Wärmemenge hinweist, zu steuern.

Zusätzlich oder alternativ kann das Gasturbinensystem ferner wenigstens einen Sensor umfassen, der dazu ausgebildet ist, wenigstens eine Messgröße zu erfassen, die auf eine Temperatur im Bereich des Turbinenrads hinweist. Dabei kann die Steuerungseinheit ferner dazu ausgebildet sein, die Wassermenge wenigstens teilweise auf der Grundlage der erfassten Messgröße, die auf die Temperatur im Bereich des Turbinenrads hinweist, zu steuern. Der wenigstens eine Sensor kann dabei einen Temperatursensor umfassen, der im Bereich des Turbinenrads angeordnet ist, und die Steuerungseinheit kann dazu ausgebildet sein, die Wassermenge wenigstens teilweise auf der Grundlage einer mittels des Temperatursensors erfassten Temperatur zu steuern. Der Temperatursensor kann im oder stromabwärts vom Bereich des Turbinenrads angeordnet sein. Alternativ kann der Temperatursensor stromaufwärts vom Turbinenrad zwischen einer Abgasreinigungsvorrichtung, insbesondere einem Abgaskatalysator, und dem Turbinenrad angeordnet sein.

Die Steuerungseinheit kann dazu ausgebildet sein, die Wassermenge ferner wenigstens teilweise auf der Grundlage eines Treibstoffdurchsatzes der Gasturbine, eines Mischungsverhältnisses des Treibstoff-Luft-Gemischs und/oder eines Drucks zu steuern.

Zusätzlich oder alternativ dazu kann der wenigstens eine Sensor eine Lambdasonde und/oder einen Stickoxidsensor umfassen, und die Steuerungseinheit kann dazu ausgebildet sein, die Wassermenge wenigstens teilweise auf der Grundlage eines Signals der Lambdasonde und/oder des Stickoxidsensors zu steuern. Ein Signal der Lambdasonde und/oder des Stickoxidsensors kann auf wenigstens eine Eigenschaft eines Brennvorgangs in der Brennkammer hinweisen, die mit der Temperatur im Bereich des Turbinenrads in technischer Beziehung steht.

Die Steuerungseinheit kann dazu ausgebildet sein, die Wassermenge ferner derart zu steuern, dass ein Wirkungsgrad der Gasturbine in Abhängigkeit von der Wassermenge maximal ist mit der Bedingung, dass im Bereich des Turbinenrads eine kritische Temperatur des Turbinenrads nicht überschritten wird.

Das Gasturbinensystem kann ferner wenigstens einen elektrischen Generator umfassen, wobei die Gasturbine zum Betreiben des elektrischen Generators angeordnet ist.

Gemäß einem weiteren Aspekt wird ein Verfahren zum Betreiben eines Gasturbinensystems, das eine Gasturbine und eine Steuerungseinheit umfasst, vorgestellt. Die Gasturbine umfasst wenigstens ein Turbinenrad, wenigstens eine Brennkammer, die zum Verbrennen eines Treibstoff-Luft-Gemischs in der Brennkammer vorgesehen ist und die mit dem Turbinenrad fluidisch verbunden ist zum Leiten eines Gasstroms aus der Brennkammer zu dem Turbinenrad, und eine Wassereinleitvorrichtung, die dazu ausgebildet ist, dem Gasstrom Wasser hinzuzufügen. Die Steuerungseinheit ist dazu ausgebildet, eine Wassermenge zu steuern, die dem Gasstrom mittels der Wassereinleitvorrichtung hinzugefügt wird. Das Verfahren umfasst Empfangen, mittels der Steuerungseinheit, wenigstens eines Eingangssignals, das auf eine in dem Gasturbinensystem verfügbare und zum Vorwärmen wenigstens eines Teils der Wassermenge verwendbare Wärmemenge hinweist; Erzeugen, mittels der Steuerungseinheit, eines Steuersignals zum Steuern der Wassereinleitvorrichtung derart, dass ein Vorwärmen wenigstens des Teils der Wassermenge mittels der Wassereinleitvorrichtung optimiert ist unter der Maßgabe, dass ein höchster Wirkungsgrad der Gasturbine erzielbar ist, wenn die verfügbare Wärmemenge zum Verdampfen eines möglichst großen Anteils der Wassermenge verwendet wird und ein Rest der verfügbaren Wärmemenge zum Vorwärmen eines restlichen Anteils der Wassermenge und/oder des Treibstoffs für die Gasturbine verwendet wird; und, Ausgeben, mittels der Steuerungseinheit, des Steuersignals an die Wassereinleitvorrichtung.

Das optimierte Vorwärmen kann einem Wirkungsgrad im Bereich von mindestens 84%, vorzugsweise mindestens 90%, bevorzugt mindestens 94%, weiter bevorzugt mindestens 98% des maximalen Wirkungsgrads entsprechen. Das Vorwärmen kann dabei ferner in Bezug auf wenigstens ein Konstruktionserfordernis und/oder wenigstens ein Betriebserfordernis der Gasturbine optimiert sein.

Die Schwellenwerttemperatur kann wenigstens teilweise bestimmt sein durch eine Temperatur, die zum Vorwärmen des Treibstoffs für die Gasturbine erforderlich ist. Zusätzlich oder alternativ kann die Schwellenwerttemperatur wenigstens teilweise bestimmt sein durch eine Temperatur, die zum Vorwärmen von Wasser mittels der Wassereinleitvorrichtung erforderlich ist. Die Schwellenwerttemperatur kann zudem wenigstens teilweise bestimmt sein durch eine Temperatur, die zum Betreiben einer Abgasreinigungsvorrichtung des Gasturbinensystems erforderlich ist.

Gemäß einem weiteren Aspekt wird ein Computerprogrammprodukt zur Verfügung gestellt. Das Computerprogrammprodukt umfasst Teile von Programmcode, die, wenn sie auf einer Prozessoreinrichtung einer Steuerungseinheit eines Gasturbinensystems ausgeführt werden, die Steuerungseinheit zum Durchführen des Verfahrens der hier vorgestellten Art konfigurieren.

Die Erfindung wird im Folgenden anhand von Ausführungsbeispielen unter Bezugnahme auf die Figuren näher erläutert. Es zeigen:
- Fig. 1: ein Gasturbinensystem gemäß einem Ausführungsbeispiel;
- Fig. 2: eine Brennkammer des Gasturbinensystems aus Figur 1;
- Fig. 3: ein Verfahren zum Betreiben eines Gasturbinensystems gemäß einem weiteren Ausführungsbeispiel;
- Fig. 4: ein Enthalpieschema für ein Gasturbinensystem gemäß einem Beispiel; und
- Fig. 5: ein Zustandsdiagramm für einen Prozess in einem Gasturbinensystem.

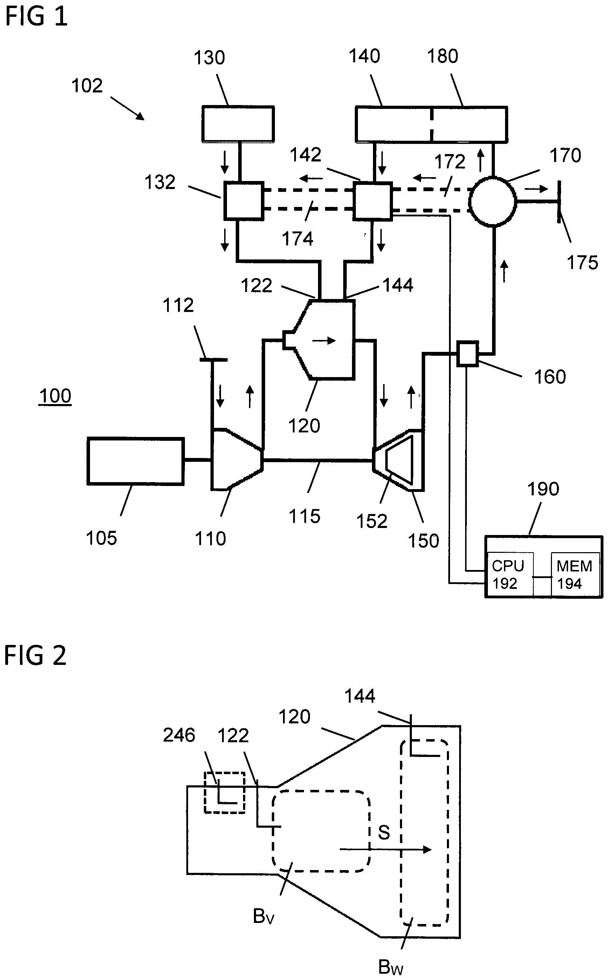

Fig. 1 zeigt schematisch und exemplarisch ein Gasturbinensystem 100 mit einer Gasturbine 102 sowie einer damit kommunikativ verbundenen Steuerungseinheit 190. Die Gasturbine 102 umfasst einen Turbogenerator 105, einen Verdichter 110 und eine Turbine 150 mit einem darin angeordneten Turbinenrad 152. Der Turbogenerator 105, der Verdichter 110 und die Turbine 150 sind entlang einer Welle 115 angeordnet und mit dieser verbunden. Die Gasturbine 102 weist ferner eine Brennkammer 120 auf. Zu Darstellungszwecken ist in Fig. 1 die Brennkammer 120 oberhalb der Welle 115 gezeigt. In einigen Beispielen entspricht dies schematisch einem Aufbau der Gasturbine 102. In weiteren typischen Ausgestaltungen der Gasturbine 102 ist die Brennkammer 120 dagegen ebenfalls entlang der Welle 115 angeordnet. Wie durch die Pfeile bzw. die mit Pfeilen versehenen Linien im Bereich der vorgenannten Komponenten in Fig. 1 gezeigt, stehen der Verdichter 110, die Brennkammer 120 und die Turbine 150 miteinander in fluidischer Verbindung. Insbesondere bilden sie Teile eines Strömungswegs, der sich ausgehend von einem Lufteinlass 112 der Gasturbine über den Verdichter 110 durch die Brennkammer 120 und weiter zur Turbine 150 erstreckt. In dem Verdichter 110 erfolgt eine Verdichtung der Zuluft. Die verdichtete Zuluft wird für einen Brennvorgang, der in der Brennkammer 120 erfolgt, verwendet. Der Gasstrom, der anschließend das Rauchgas des Brennvorgangs enthält, wird zu der Turbine 150 weitergeleitet, in der wiederum mittels des (Rauch-)Gasstroms das Turbinenrad 152 angetrieben wird. Von der Turbine 150 aus erstreckt sich der Strömungsweg in Richtung auf einen Abgasauslass 175.

Der Brennvorgang in der Brennkammer 120 wird durch ein Treibstoff-Luft-Gemisch genährt. Dazu wird der Brennkammer 120 neben der vom Verdichter 110 kommenden verdichteten Zuluft Treibstoff über eine Treibstoffeindüsung 122 zugeführt. Der Treibstoff vermischt sich in der Brennkammer 120 mit der verdichteten Zuluft zu dem Treibstoff-Luft-Gemisch, das zur Verbrennung in der Brennkammer 120 vorgesehen ist. In dem Beispiel von Fig. 1 umfasst die Gasturbine 102 einen Treibstofftank 130. Von diesem gelangt Treibstoff zunächst zu einer Treibstoffheizung 132 und von dort zu der Treibstoffeindüsung 122.

Die Anordnung der vorgenannten Komponenten und ihre Funktionsweise, soweit vorangehend beschrieben, unterscheiden sich bei vielen Beispielen der Gasturbine 102 nicht grundsätzlich von der Anordnung entsprechender Komponenten und ihrer Funktionsweise in herkömmlichen Gasturbinen.

In einigen Beispielen umfasst das Gasturbinensystem 100 außerdem einen elektrischen Generator (nicht dargestellt), wobei die Gasturbine 102 zum Betreiben des elektrischen Generators vorgesehen ist, mittels dessen die Rotation des Turbinenrads 152, beispielsweise über eine Kopplung des Generators an die Welle 115, in elektrische Energie umgewandelt wird. Eine solche Anwendung und die dafür erforderliche Herrichtung der Gasturbine 102 unterscheiden sich bei vielen dieser Beispiele ebenfalls nicht grundsätzlich von denen herkömmlicher Gasturbinen-Generator-Anordnungen.

Bei der Gasturbine 102 weist die Brennkammer 120 neben der Treibstoffeindüsung 122 zusätzlich eine Wassereindüsung 144 auf. Die Wassereindüsung 144 dient dazu, dem Gasstrom Wasser hinzuzufügen. Das Wasser gelangt in dem gezeigten Beispiel von einem Wassertank 140 über eine Wassereinspritzvorrichtung 142, in der das Wasser gefördert und entsprechend jeweiligen Prozesserfordernissen konditioniert, beispielsweise wenigstens teilweise verdampft und mit einem erforderlichen Druck beaufschlagt, wird, zu der Wassereindüsung 144. Der Wassertank 140, die Wassereinspritzvorrichtung 142 und die Wassereindüsung 144 sind Teile einer Wassereinleitvorrichtung der Gasturbine 102. Die Temperatur des (in typischen Beispielen als überkritischer Dampf vorliegenden) Wassers bei der Einspritzung in die Brennkammer 120 ist wesentlich niedriger als eine Prozesstemperatur des Brennvorgangs sowie eine Temperatur des durch den Brennvorgang erzeugten Rauchgasstroms. Die Wassereinspritzung bewirkt daher eine Absenkung der Temperatur des so erzeugten Wasser-(Rauch)Gas-Gemischs gegenüber einer Temperatur des Gasstroms vor, d.h. stromaufwärts von, der Wassereinspritzung. Das erzeugte Wasser-Gas-Gemisch, bzw. der so mit Wasser versehene Gasstrom, bewirkt daher beim Passieren der Turbine 150 eine geringere Aufheizung der Turbine 150 und insbesondere des darin angeordneten Turbinenrads 152, als es bei einem Betreiben der Gasturbine 102 ohne die Wassereinspritzung bei einem dabei unveränderten Brennvorgang in der Brennkammer 120 der Fall wäre. Die Wassereinspritzung in den Gasstrom gestattet damit insbesondere die Verwendung eines Brennvorgangs, der herkömmlich, d.h. ohne Wassereinspritzung, zu einer Überhitzung der Turbine 150 führen würde.

In Fig. 1 ist die Wassereindüsung 144 schematisch stromabwärts von der Treibstoffeindüsung 122 dargestellt. Dies entspricht einer bevorzugten Funktionsweise der Gasturbine 102, bei der der innerhalb des Gasstroms erfolgende Brennvorgang zumindest weitgehend abgeschlossen ist, bevor dem Gasstrom über die Wassereindüsung 144 Wasser zugeführt wird. Dies ist vorteilhaft in Hinsicht auf einen "sauberen" Brennprozess, bei dem möglichst wenige Schadstoffe gebildet bzw. freigesetzt werden. Eine räumliche Anordnung der Wassereindüsung 144 in Bezug auf die Brennkammer 120 stromabwärts von einer Anordnung der Treibstoffeindüsung 122 ist dafür jedoch nicht in allen Beispielen der Gasturbine 102 erforderlich. Vielmehr ist die Anordnung der Wassereindüsung 144 zu dem beschriebenen Zweck bedingt durch fluiddynamische Vorgänge, insbesondere ein Strömungsverhalten innerhalb der Brennkammer 120, die sich bei einzelnen Ausgestaltungen der Gasturbine 102 unterscheiden können. Umgekehrt ist wegen der bei vorgesehenen Betriebsarten der Gasturbine 102 verhältnismäßig hohen Temperatur des Brennvorgangs eine rasch erfolgende Kühlung durch die Wassereinspritzung zum Schutz des Brennkammermaterials vorteilhaft bzw. erforderlich. In einigen Beispielen erfolgt die Wassereinspritzung zu diesem Zweck außerdem derart, dass ein Strom des eingespritzten Wassers ein Brennvolumen innerhalb der Brennkammer gegenüber der Brennkammerwand wenigstens teilweise umhüllt, bevor eine Vermischung von Wasser und Rauchgasstrom erfolgt.

Die Gasturbine 102 umfasst außerdem einen Sensor 160. In dem Beispiel von Fig. 1 ist der Sensor 160 ausgangsseitig von der Turbine 150 in dem Strömungsweg angeordnet. In anderen Beispielen der Gasturbine 102 ist der Sensor 160 abweichend hiervon, beispielsweise im Bereich der Turbine 150, vorgesehen. Der Sensor 160 ist dazu ausgebildet, eine Messgröße zu erfassen, die auf eine Temperatur im Bereich der Turbine 150 hinweist. Beispielsweise umfasst der Sensor 160 einen Temperatursensor, der eine Temperatur stromabwärts von der Turbine oder im Bereich der Turbine 150 erfasst. In weiteren Beispielen der Gasturbine 102 umfasst der Sensor 160 einen hiervon abweichenden Sensor oder zusätzliche Sensoren, beispielsweise eine Lambdasonde im Abgasstrom, deren Signale, gegebenenfalls unter Hinzuziehen weiterer Prozessparameter, wie beispielsweise eines Treibstoffdurchsatzes, Rückschlüsse auf die Temperatur im Bereich der Turbine 150 gestatten. Die erfasste(n) Messgröße(n) und der bzw. die weitere(n) Prozessparameter gestatten beispielsweise Rückschlüsse auf den Brennvorgang in der Brennkammer 120, der wiederum auf eine resultierende Temperatur im Bereich der Turbine 150 schließen lässt. Der Sensor 160 ist kommunikativ mit der Steuerungseinheit 190 verbunden. Der Sensor 160 ist dabei dazu ausgebildet, Sensorsignale an die Steuerungseinheit 190 auszugeben.

Die Steuerungseinheit 190 umfasst eine Prozessoreinrichtung 192 sowie eine damit verbundene Speichervorrichtung 194. Die Steuerungseinheit 190 ist außerdem mit der Wassereinspritzvorrichtung 142 kommunikativ verbunden. Die Steuerungseinheit 190 ist dazu ausgebildet, Sensorsignale von dem Sensor 160 zu empfangen und wenigstens teilweise auf der Grundlage empfangener Sensorsignale Steuerungssignale für die Wassereinspritzvorrichtung 142 zu bestimmen und diese an die an die Wassereinspritzvorrichtung 142 auszugeben, um damit eine oder mehrere Funktionen der Wassereinspritzvorrichtung 142 zu steuern.

Die Steuerungseinheit 190 steuert eine Wassermenge, die mittels der Wassereinspritzvorrichtung 142 über die Wassereindüsung 144 dem Gasstrom zugeführt wird. Die dem Gasstrom zugeführte Wassermenge wird dabei derart gesteuert, dass das dadurch erzeugte Wasser-Gas-Gemisch eine Temperatur aufweist, die bei Weiterleiten des Gasstroms in die Turbine 150 eine Temperatur im Bereich der Turbine 150 bewirkt, die niedriger ist als eine kritische Temperatur der Turbine 150, d.h. niedriger als eine Höchsttemperatur, bei der ein Betrieb der Turbine 150 vorgesehen oder ohne Beschädigung der Turbine 150 möglich ist. Üblicherweise ist die kritische Temperatur bestimmt durch die Hitzebeständigkeit der Flügel des Turbinenrads. Zu dem beschriebenen Zweck ist die Steuerungseinheit 190 dazu ausgestaltet, anhand eines von dem Sensor 160 empfangenen Sensorsignals sowie gegebenenfalls ergänzend herangezogener Betriebs- oder Prozessparameter der Gasturbine 102, die insgesamt auf eine Temperatur im Bereich der Turbine 150 schließen lassen, ein entsprechendes Steuersignal zu bestimmen und an die Wassereinspritzvorrichtung 142 auszugeben.

Die Steuerungseinheit 190 steuert die mittels der Wassereinspritzvorrichtung 142 zugeführte Wassermenge außerdem so, dass eine resultierende Temperatur im Bereich der Turbine 150 dadurch nicht unter eine vorbestimmte Schwellenwerttemperatur sinkt. Wie nachfolgend näher ausgeführt, ist bei der Gasturbine 102 vorgesehen, die in dem Gasstrom nach Passieren des Turbinenrads 152 enthaltene Wärme zum Heizen des Treibstoffs und/oder des Wassers für nachfolgende Brennvorgänge und/oder Wassereinspritzvorgänge zu nutzen. Dazu steuert die Steuerungseinheit 190 die zugeführte Wassermenge derart, dass eine für diese Arbeitsprozesse erforderliche Ausgangstemperatur des Gasstroms bei Austritt aus der Turbine 150 infolge der Wassereinspritzung nicht unterschritten, sowie gegebenenfalls um nicht mehr als einen Toleranzbereich überschritten, wird.

Die Gasturbine 102 umfasst außerdem einen Wärmetauscher 170. Dieser ist stromabwärts von der Turbine 150 in dem Strömungsverlauf angeordnet. Der Wärmetauscher 170 ist dazu vorgesehen, in dem Gasstrom enthaltene Wärme zum Vorheizen von Treibstoff und/oder von Einspritzwasser zu entziehen. Dabei wird mittels des Wärmetauschers 170 dem Gasstrom entzogene Wärme mittels eines Heizkreislaufs 172, 174 der Treibstoffheizung 132 und/oder der Wassereinspritzvorrichtung 142 zugeführt. In dem gezeigten Beispiel der Gasturbine 102 erstreckt sich der Heizkreislauf 172, 174 über ein erstes Heizkreislaufsegment 172 zu der Wassereinspritzvorrichtung 142 sowie über ein zweites Heizkreislaufsegment 174 zu der Treibstoffheizung 132. In abweichenden Beispielen der Gasturbine 102 ist der Heizkreislauf zum Zweck des Vorheizens nur eines der Betriebsstoffe, d.h. des Treibstoffs oder des Einspritzwassers, vorgesehen. Dabei erstreckt sich der Heizkreislauf jeweils nur zu einem aus Treibstoffheizung 132 und Wassereinspritzvorrichtung 142. Die in dem Gasstrom verbleibende Restwärme entspricht einer Temperatur unterhalb des Taupunkts. Dies gestattet eine Rückgewinnung wenigstens eines Teils des zuvor eingespritzten Wassers aus dem Gasstrom infolge des Passierens des Wärmetauschers 170. Das derart zurückgewonnene Wasser wird in einem Auffangtank 180 gesammelt und von dort wiederaufbereitet dem Wassertank 140 für erneute Einspritzvorgänge zugeführt. Der Abgasstrom tritt über einen Auslass 175 aus der Gasturbine 102 aus. In anderen Beispielen dient der Heizkreislauf zu weiteren Zwecken, wie etwa wahlweise zum Betreiben eines Blockheizkraftwerks mittels überschüssiger Wärme, insbesondere mittels solcher Wärme, die aufgrund thermodynamischer Beschränkungen nicht (mehr) zum (weiteren) Vorwärmen eines unverdampften Anteils der Wassermenge verwendbar ist. In anderen Beispielen ist zudem keine Rückgewinnung von Wasser aus dem Gasstrom vorgesehen.

Fig. 2 zeigt schematisch und exemplarisch eine vergrößerte Ansicht der Brennkammer 120. Dabei handelt es sich beispielsweise um die Brennkammer 120 aus einem der voranstehend im Zusammenhang mit Fig. 1 beschriebenen Beispiele. Die Brennkammer 120 weist, wie voranstehend beschrieben, eine Treibstoffeindüsung 122 und eine Wassereindüsung 144 auf. Die Treibstoffeindüsung 122 und die Wassereindüsung 144 umfassen beispielsweise jeweils eine oder mehrere Düsen, über die Treibstoff bzw. Wasser in den Innenraum der Brennkammer 120 eingespritzt werden kann. Wie Fig. 2 schematisch gezeigt, ist bei bevorzugten Beispielen ein Wassereinspritzbereich B_{W}, innerhalb dessen ein Vermischen des Gasstroms mit dem eingespritzten Wasser erfolgt, in einer in Strömungsrichtung S des Gasstroms stromabwärts gelegenen Position in Bezug auf einen Brennbereich B_{V} der Brennkammer angeordnet, innerhalb dessen bei üblichen Betriebszuständen der Gasturbine eine Verbrennung des Treibstoff-Luft-Gemischs erfolgt. Dadurch enthält der Gasstrom in dem Wassereinspritzbereich B_{W} wenigstens überwiegend keine brennenden Anteile des Treibstoff-Luft-Gemischs mehr. Beispielsweise ist bei vorgesehenen Betriebszuständen der Gasturbine ein Brennvorgang zu wenigstens 60%, bevorzugt zu wenigstens 80%, bevorzugt zu wenigstens 90%, bevorzugt zu wenigstens 95% abgeschlossen, bevor der sich daraus ergebende (Rauch-)Gasstrom in den Wassereinspritzbereich B_{W} eintritt. Abschluss des Brennvorgangs liegt beispielsweise dann vor, wenn sämtliche bei dem Brennprozess umsetzbaren Treibstoffanteile im Gasstrom umgesetzt sind. Dabei gelten die voranstehenden Werte für den Fortschritt des Brennprozesses beispielsweise in Bezug auf eine bei dem Brennprozess insgesamt umzusetzende Treibstoffmenge. In anderen Beispielen gelten die voranstehenden Werte für den Fortschritt des Brennprozesses in Bezug auf eine bei dem Brennprozess in jedem von mehreren Teilströmen des Gasstroms umzusetzende Treibstoffmenge. Dabei entsprechen verschiedene Teilströme beispielsweise verschiedenen Bereichen eines Querschnittsprofils des Gasstroms.

Bei einigen Ausführungen der Brennkammer 120 ist zudem stromaufwärts von der Treibstoffeindüsung 122 zusätzlich eine Primärwassereindüsung 246 vorgesehen. Primärwassereindüsungen, die dem Brennprozess vorgeschaltet sind, sind bekannt, um durch kontrollierte Zugabe einer (verhältnismäßig geringen) Menge von Wasser zu dem Brennvorgang die Bildung bestimmter Schadstoffe zu verringern. Dies betrifft beispielsweise Stickoxide. Die zur Minimierung derartiger Schadstoffe mittels der Primärwassereindüsung 246 zuzuführende Menge an Wasser ist jedoch typischerweise gering gegenüber einer bei vorgesehenen Betriebsarten des Gasturbinensystems 100 mittels der Wassereindüsung 144 zuzuführende Wassermenge.

In einigen Beispielen ist auch die Menge des mittels der Primärwassereindüsung 246 zugeführten Wassers durch die Steuerungseinheit 190 gesteuert. Dazu empfängt die Steuerungseinheit 190 beispielsweise von dem Sensor 160, der in diesem Fall beispielsweise einen Stickoxidsensor umfasst, ein Signal, das auf eine Stickoxidmenge im Abgasstrom hinweist. Die Steuerungseinheit 190 ist dabei beispielsweise dazu ausgebildet, eine Gesamtwassermenge zu bestimmen, die dem Gasstrom mittels der Wassereindüsung 144 und der Primärwassereindüsung 246 insgesamt zugeführt werden soll. Wenigstens teilweise auf der Grundlage des Signals von dem Stickoxidsensor bestimmt die Steuerungseinheit denjenigen Anteil von der Gesamtwassermenge, der mittels der Primärwassereindüsung 246 zugeführt wird. Ein Steuersignal, das dem verbleibenden Teil der Gesamtwassermenge entspricht, wird dagegen an die Wassereinspritzvorrichtung 142 zum Einspritzen der entsprechenden Wassermenge mittels der Wassereindüsung 144 ausgegeben. In einigen Beispielen erfolgt auch die Primärwasserzuführung über die Wassereinspritzvorrichtung 142, die zu diesem Zweck außerdem mit der Primärwassereindüsung 246 verbunden ist. In anderen Beispielen des Gasturbinensystems 100 ist die Primärwassereinspritzung nicht durch die Steuerungseinheit 190 gesteuert. Dabei empfängt die Steuerungseinheit 190 in einigen Ausbildungen, beispielsweise von einer separaten Primärwassersteuerung, ein Signal, das auf die Menge zugeführten Primärwassers hinweist, und die Steuerungseinheit 190 bestimmt anhand der Differenz aus einer vorgesehenen Gesamtwassermenge und der Menge zugeführten Primärwassers die Wassermenge, die dem Gasstrom mittels der Wassereindüsung 144 zuzuführen ist.

Bei dem Gasturbinensystem 100 ist die bei herkömmlichen Gasturbinen zur Kühlung der Turbine als zusätzliches Volumen des Gasstroms erhöhte Zuluft wenigstens teilweise durch die Einspritzung von Wasser, typischerweise in Form von überkritischem Dampf, ersetzt. Das Wasser wird dabei im Wesentlichen nach der Verbrennung dem Gasstrom zugeführt. Die benötigte Leistung zum Einbringen des Wassers, einschließlich einer Konditionierung des Wassers bezüglich Temperatur und/oder Druck, ist dabei erheblich niedriger als eine Leistung, die erforderlich ist, um die Turbinenanlage in gleichem Umfang mit Luft zu kühlen, wobei diese Leistung als erhöhte Verdichterleistung erbracht werden müsste, um ein entsprechendes zusätzliches Volumen an Zuluft zu verdichten. Dies begünstigt einen hohen Wirkungsgrad des Gasturbinensystems 100. Das dem Gasstrom zugeführte Wasser erhöht zudem den Massestrom durch die Turbine und wirkt sich damit ebenfalls vorteilhaft auf den Wirkungsgrad des Gasturbinensystems 100 aus.

Die Kühlung des Rauchgasstroms mittels der beschriebenen Wassereinleitvorrichtung unabhängig von, insbesondere nach, dem Brennvorgang gestattet zudem zumindest teilweise eine Entkopplung des Kühlvorgangs von dem zur Verbrennung verwendeten Treibstoff-Luft-Gemisch. Dies wiederum gestattet die Verwendung auch deutlich fetterer, d.h. luftärmerer, Treibstoff-Luft-Gemische, als dies bei herkömmlichen Turbinen der Fall ist. Insbesondere ist das Gasturbinensystem 100 dazu ausgebildet, dauerhaft mit einem stöchiometrischen Treibstoff-Luft-Gemisch betrieben zu werden. Gegenüber herkömmlichen, mit erheblich magereren Gemischen betriebenen Gasturbinen hat ein Brennvorgang mit stöchiometrischem Gemisch den Vorteil eines erheblich höheren Wirkungsgrads. Die dabei auftretende höhere Temperatur des dadurch erzeugten Rauchgases, die einen solchen Betrieb bei herkömmlichen Turbinen ausschließt, wird bei dem Gasturbinensystem 100 mittels anschließender Wassereinspritzung so weit gesenkt, dass die dabei in der Turbine 150 und insbesondere im Bereich des Turbinenrads 152 resultierende Temperatur unterhalb einer kritischen Temperatur des Turbinenrads 152 liegt.

Die beschriebene Wassereinspritzung gestattet zudem ein Abkühlen des Gasstroms derart, dass im Bereich der Turbine 150 selbst bei einem Betreiben der Gasturbine 102 in einem hohen Leistungsbereich eine erheblich geringere Temperatur vorliegt, als dies bei herkömmlichen Gasturbinen der Fall ist, bei denen Temperaturen im Bereich der Turbine von üblicherweise bis zu 1200 °C vorliegen. Dadurch gestattet das Gasturbinensystem 100 die Verwendung günstigerer und einfacher zu bearbeitender Werkstoffe, da diese nur geringeren Anforderungen bezüglich einer kritischen Temperatur zu genügen brauchen. Bei Ausgestaltungen des Gasturbinensystems 100 sind theoretisch Wirkungsgrade von mehr als 30 % auch bei einer verhältnismäßig niedrigen Turbineneintrittstemperatur von etwa 500 °C erzielbar. Das Gasturbinensystem 100 gestattet gleichzeitig eine kompakte Ausgestaltung. Damit ist das Gasturbinensystem 100 besonders im Rahmen einer Gasturbinen-Generator-Anordnung zur Stromerzeugung in einem elektrisch angetriebenen Fahrzeug, bevorzugt einem Lkw oder einem anderen Nutzfahrzeug, einem Schiff, in Baumaschinen oder in mobilen Notstromaggregaten, geeignet.

Die Wassereinspritzung nach dem Brennvorgang bewirkt zudem, dass der Brennvorgang durch die eingespritzte Wassermenge zumindest nicht wesentlich beeinträchtigt wird. Dadurch ist insbesondere ein erhöhter Schadstoffausstoß, der sich bei bekannten Turbinenanordnungen im Fall erhöhter Wasserzugabe ergibt, vermieden.

Die in Fig. 2 gezeigte Anordnung von Brennbereich B_{V} und Wassereinspritzbereich B_{W} ist diesbezüglich als schematische Vereinfachung anzusehen. Insbesondere sind in Fig. 2 der Brennbereich B_{V} und der Wassereinspritzbereich B_{W} jeweils als ein zusammenhängender Bereich gezeigt, Zudem erstrecken sich in der Darstellung von Fig. 2 der Brennbereich B_{V} und der Wassereinspritzbereich B_{W} vollständig in getrennten Normalebenen in Bezug auf die Strömungsrichtung S. Es versteht sich jedoch, dass für den beschriebenen Zweck auch eine hiervon abweichende Form und/oder Anordnung des Brennbereichs B_{V} und/oder des Wassereinspritzbereichs B_{W} vorliegen kann. Insbesondere bei einer Umsetzung der Treibstoffeindüsung 122 und/oder der Wassereindüsung 144 in Gestalt von jeweils mehreren räumlich getrennt voneinander angeordneten Düsen ist der Brennbereich B_{V} und/oder der Wassereinspritzbereich B_{W} in einigen Beispielen aus jeweils mehreren getrennten Teilbereichen gebildet, innerhalb deren der Brennprozess bzw. das Vermischen des Gasstroms mit eingespritztem Wasser jeweils für einen Teil des Gasstroms erfolgt.

Zudem erfolgt in einigen Beispielen bezogen auf ein Querschnittsprofil des Gasstroms ein Vermischen des Gasstroms mit eingespritztem Wasser in einigen Profilbereichen wenigstens teilweise weiter stromaufwärts bzw. stromabwärts als in anderen Profilbereichen. Dabei erstrecken sich der Brennbereich B_{V} und der Wassereinspritzbereich B_{W} beispielsweise wenigstens teilweise innerhalb einer selben Normalebene. In einigen Beispielen ist zudem in einigen Profilbereichen des Gasstroms der Brennprozess weiter fortgeschritten als in anderen Profilbereichen, wenn die jeweiligen Profilbereiche des Gasstroms in den Wassereinspritzbereich B_{W} eintreten. Die vorgenannten Werte für einen Fortschritt des Brennprozesses bei Eintritt des Gasstroms in den Wassereinspritzbereich B_{W} beziehen sich dabei beispielsweise auf einen gesamten Brennprozess, d.h. eine Gesamtheit der bei dem Brennprozess insgesamt umzusetzenden Treibstoffanteile, bzw. vergleichbar einem Mittelwert. Dies gilt beispielsweise unabhängig von einer vorliegenden Geometrie des Brennbereichs B_{V} und des Wassereinspritzbereichs B_{W}.

Im Unterschied zu bekannten Gasturbinen, bei denen eine kurzzeitige Wassereinspritzung vorgesehen ist, ist das Gasturbinensystem 100 besonders zum Dauerbetrieb mit Wassereinspritzung ausgebildet. Zu diesem Zweck ist die Steuerungseinheit 190 so ausgestaltet, dass sie die zugeführte Wassermenge, sowie in einigen Beispielen weitere Prozessparameter, wie etwa eine Temperatur oder einen Druck des zugeführten Wassers, kontinuierlich steuert auf der Grundlage einer kontinuierlichen Erfassung der Temperatur im Bereich der Turbine 150 oder einer anderen bzw. weiterer, gegebenenfalls in Kombination miteinander auf eine Temperatur im Bereich der Turbine 150 hinweisender Größen.

In einigen Beispielen werden mittels der Steuerungseinheit 190 zudem Parameter erfasst oder ermittelt, die für den Brennvorgang in der Brennkammer 120 und eine sich daraus ergebende Temperatur im Bereich der Turbine 150 bestimmend sind. Dabei ist in einigen Beispielen des Gasturbinensystems 100 die Steuerungseinheit 190 ferner zur Steuerung einer Treibstoffzufuhr zu der Brennkammer 120 ausgebildet. Das Gasturbinensystem 100 gestattet dabei in einigen Beispielen eine zumindest weitgehende Steuerung des Brennvorgangs sowie einer entsprechenden Wassereinspritzung gemäß einem für die jeweilige Ausgestaltung der Gasturbine 102 optimierten, beispielsweise maximalen, Wirkungsgrad, einschließlich einer Eintrittstemperatur des Gasstroms in die Turbine 150 mit Blick auf eine Rückgewinnung des Einspritzwassers und/oder einer Verwendung von Wärme im austretenden Gasstrom zum Vorheizen von Treibstoff und/oder Einspritzwasser. Die Steuerung von Treibstoff- und gegebenenfalls Wassereinspritzung mittels der Steuerungseinheit 190 erfolgt dabei beispielsweise anhand von Kennfeldern, die in der Speichervorrichtung 194 zum Auslesen mittels der Prozessoreinrichtung 192 gespeichert sind, und/oder anhand kontinuierlicher Berechnung auf der Grundlage thermomechanischer Gesetzmäßigkeiten sowie den durch die jeweilige Ausgestaltung der Gasturbine 102 gegebenen Randbedingungen. Diese können dabei ebenfalls wenigstens teilweise in der Speichervorrichtung 194 gespeichert sein und von der Prozessoreinrichtung 192 für die jeweilige Berechnung ausgelesen werden.

Die vom Sensor 160 sowie in einigen Beispielen von weiteren Sensorvorrichtungen erfassten Messgrößen umfassen bei den vorgenannten Anwendungen beispielsweise einen eingangsseitigen Luftmassenstrom im Bereich des Lufteinlasses 112, eine Abgastemperatur im Bereich des Abgasauslasses 175, die Temperatur im Bereich der Turbine 150, den in die Brennkammer 120 eintretenden Wassermassenstrom, Druck und Temperatur des Einspritzwassers, eine Abgaszusammensetzung, insbesondere eine Stickoxidkonzentration im Bereich des Abgasauslasses 175, Leistung und Drehzahl der Turbine, sowie in einigen Beispielen weitere einen Betrieb der Gasturbine 102 bestimmende und/oder sich daraus ergebende Größen und Gasstromzusammensetzungen.

Das Gasturbinensystem 100 gestattet bei einigen der vorgenannten Beispiele einen bezüglich des Wirkungsgrads verbesserten Betrieb der Gasturbine 102 nicht nur bei einer Nenndrehzahl der Gasturbine 102, sondern in gleicher Weise auch im Teillastbereich. Dies ist vorteilhaft besonders bei mobilen Anwendungen und gestattet auch bei einem solchen Betrieb das Einstellen eines möglichst geringen Schadstoffausstoßes. Dabei wird in einigen Beispielen die Abgastemperatur so eingestellt, dass sie zumindest der Temperatur entspricht, die zum Betreiben einer Abgasreinigungsvorrichtung des Gasturbinensystems, beispielsweise der Starttemperatur eines vorhandenen Abgaskatalysators, eines Partikelfilters oder SCR- (d.h., Selektive-katalytische-Reduktions-)Katalysators, entspricht.

In einigen Beispielen des Gasturbinensystems 100 ist eine Abgassensorik, beispielsweise eine Lambdasonde, vorgesehen, anhand deren Signal der Treibstoffmassenstrom geprüft und bezüglich des Treibstoff-Luft-Verhältnisses angepasst werden kann. Damit lassen sich beispielsweise Effekte durch schwankende Treibstoffqualitäten, wie sie vor allem bei sogenanntem LPG, d.h. Liquefied Petroleum Gas, auch bekannt als Autogas, vorkommen, ausgleichen.

In einigen Beispielen ist das Gasturbinensystem 100 als Teil einer Stromerzeugung in einem elektrisch angetriebenen Kraftfahrzeug vorgesehen, das ferner für einen hybriden Betrieb ausgebildet ist. Dabei ist die Steuerungseinheit 190 beispielsweise dazu ausgebildet, den Ladezustand einer Batterie und/oder die Rekuperationsenergie einer Bremse des Fahrzeugs zu überwachen und die Leistung der Gasturbine 102 entsprechend zu steuern, um ein Überladen der Batterie zu verhindern.

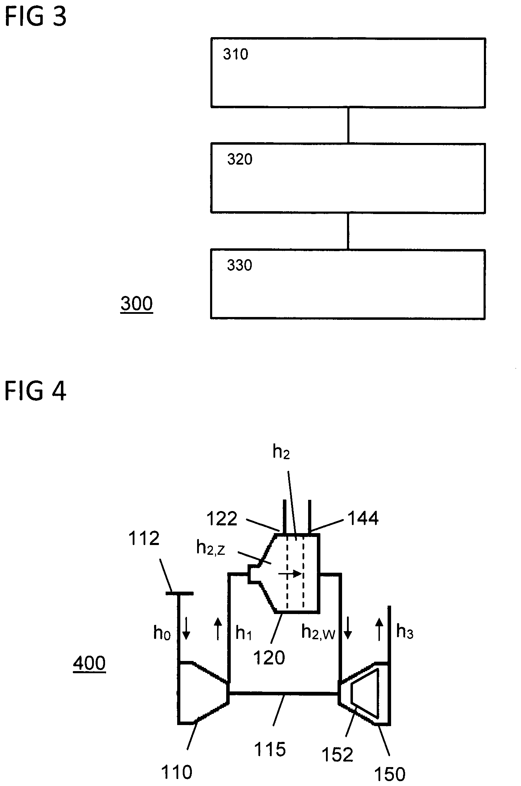

Gemäß dem Voranstehenden gestattet die Steuerungseinheit 190 in einigen Beispielen in Kombination mit einer entsprechenden Ausgestaltung des Sensors 160 und gegebenenfalls weiterer Sensoren der Gasturbine 102 sowie gegebenenfalls weiterer den Betrieb der Gasturbine 102 bestimmender Eingangsgrößen, die zuzuführende Wassermenge mittels Berechnung oder Kennfeldsteuerung derart zu bestimmen, dass ein Wirkungsgrad der Gasturbine 102 unter den jeweils vorgegebenen Bedingungen optimiert, beispielsweise maximal, ist. Ein Beispiel für eine solche Berechnung ist nachfolgend anhand von Fig. 4 vorgestellt.

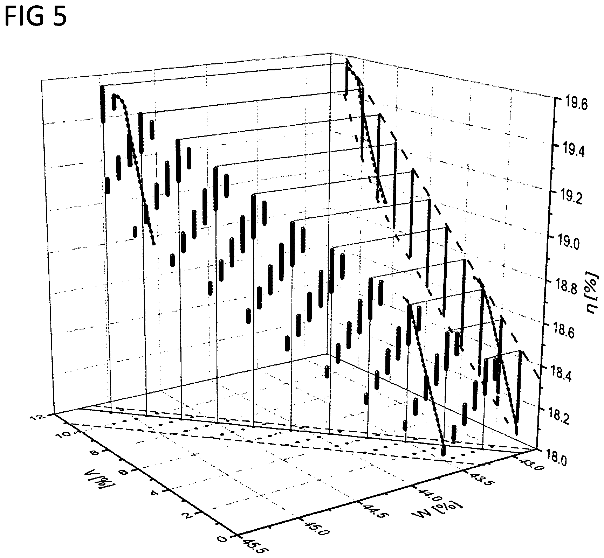

Ein optimierter Wirkungsgrad muss nicht zwingend dem maximalen Wirkungsgrad entsprechen. Wie nachfolgend im Zusammenhang mit Fig. 5 beschrieben, liegt einer besonders vorteilhaften Ausführung der Erfindung die Erkenntnis zugrunde, dass ein maximaler Wirkungsgrad bei der Verwendung von ausschließlich rückgewonnener Abgaswärme zum Verdampfen eines möglichst großen Anteils der jeweils zuzuführenden Wassermenge, die beispielsweise durch eine erforderliche Kühlung des Gasstroms bestimmt ist, und der Verwendung eines Rests der rückgewonnenen Abgaswärme zum Vorwärmen eines restlichen Anteils der Wassermenge und/oder des Treibstoffs für die Gasturbine erreichbar ist. Ein auf jeweilige Erfordernisse bei der Konstruktion oder bei dem Betrieb der Gasturbine 102 optimiertes Vorwärmen kann dagegen einen etwas geringeren als den maximal möglichen Wirkungsgrad bewirken. Beispielsweise kann in bestimmten Fällen vorgesehen sein, zum Vorwärmen des Treibstoffs anstatt oder zusätzlich zu rückgewonnener Abgaswärme durch elektrisches Heizen erzeugte Wärme zuzuführen. Derartige Abweichungen von einem Idealbetrieb der Gasturbine 102 können vorteilhaft sein, um beispielsweise einen Betrieb der Gasturbine 102 unter veränderlichen äußeren Bedingungen zu stabilisieren oder eine Konstruktion der Gasturbine 102 je nach Anforderungen zu vereinfachen oder sie bestimmten Anforderungen anzupassen. Auch ein solches je nach Umständen gemäß Konstruktions- bzw. Betriebserfordernissen optimiertes Vorwärmen erfolgt jedoch unter der voranstehend beschriebenen Maßgabe für das Erzielen eines höchsten Wirkungsgrads und bewirkt dabei beispielsweise einen Wirkungsgrad, der mindestens 84%, vorzugsweise mindestens 90%, bevorzugt mindestens 94%, weiter bevorzugt mindestens 98% des maximalen Wirkungsgrads der Gasturbine 102 bei der jeweils zugeführten Wassermenge entspricht.

Fig. 3 zeigt ein Flussdiagramm eines Verfahrens 300 zum Betreiben eines Gasturbinensystems wie voranstehend beschrieben. Das Gasturbinensystem umfasst dabei eine Gasturbine und eine Steuerungseinheit. Die Gasturbine umfasst wenigstens ein Turbinenrad, wenigstens eine Brennkammer, die zum Verbrennen eines Treibstoff-Luft-Gemischs in der Brennkammer vorgesehen ist und die mit dem Turbinenrad fluidisch verbunden ist zum Leiten eines Gasstroms aus der Brennkammer zu dem Turbinenrad, und eine Wassereinleitvorrichtung, die dazu ausgebildet ist, dem Gasstrom Wasser hinzuzufügen. Die Steuerungseinheit ist dazu ausgebildet, eine Wassermenge zu steuern, die dem Gasstrom mittels der Wassereinleitvorrichtung hinzugefügt wird.

Das Verfahren 300 umfasst Empfangen, mittels der Steuerungseinheit, wenigstens eines Eingangssignals, das auf eine in dem Gasturbinensystem verfügbare und zum Vorwärmen wenigstens eines Teils der Wassermenge verwendbare Wärmemenge hinweist, Schritt 310. Das Verfahren 300 umfasst zudem Erzeugen, mittels der Steuerungseinheit, eines Steuersignals zum Steuern der Wassereinleitvorrichtung derart, dass ein Vorwärmen wenigstens des Teils der Wassermenge mittels der Wassereinleitvorrichtung optimiert ist unter der Maßgabe, dass ein höchster Wirkungsgrad der Gasturbine erzielbar ist, wenn die verfügbare Wärmemenge zum Verdampfen eines möglichst großen Anteils der Wassermenge verwendet wird und ein Rest der verfügbaren Wärmemenge zum Vorwärmen eines restlichen Anteils der Wassermenge und/oder des Treibstoffs für die Gasturbine verwendet wird, Schritt 320. Das Verfahren 300 umfasst außerdem Ausgeben, mittels der Steuerungseinheit, des Steuersignals an die Wassereinleitvorrichtung, Schritt 330.

Anhand von Fig. 4 ist nachfolgend verkürzt eine Beispielberechnung für den Betrieb eines Gasturbinensystems nach einem der voranstehenden Beispiele vorgestellt. Die vorgestellte Beispielrechnung ist in identischer Form oder nach Anpassung an jeweils geänderte Anwendungsbedingungen geeignet, um als Grundlage für ein Verfahren zum Betreiben eines Gasturbinensystems, insbesondere zum Steuern von Prozessgrößen mit optimiertem Vorwärmen einer zuzuführenden Wassermenge nach einem der voranstehenden Beispiele, verwendet zu werden.

Fig. 4 zeigt ein Diagramm 400, in dem verschiedene Enthalpien h₁, h_{2,Z}, h₂, h_{2,W}, h₃ verschiedenen Abschnitten des Strömungswegs durch Teile eines Gasturbinensystems zugeordnet sind. Gleiche Bezugszeichen wie in Fig. 1 bezeichnen darin gleiche Komponenten eines Gasturbinensystems. Die nachfolgende Berechnung beruht auf einer bevorzugten Verwendung des Gasturbinensystems zum Betreiben eines elektrischen Generators in einem elektrisch angetriebenen Kraftfahrzeug sowie auf einer Verwendung des bevorzugten CO₂-neutralen Brennstoffs Ammoniak. Die Berechnung ist jedoch analog auch für andere Brennstoffe möglich. Die Betriebsparameter sind anhand der nachfolgend beschriebenen Formeln für vorgesehene Anwendungen gewählt. Die Berechnung ist zudem für ein vorteilhaftes stöchiometrisches Treibstoff-Luft-Gemisch sowie einen typischen Brennkammerinnendruck von 600 kPa und entsprechenden Ammoniak- und Wassereinspritzdrücken von 600 kPa durchgeführt.

Die elektrische Leistung, Pₑₗ, der Gasturbine-Generator-Anordnung berechnet sich gemäß nachfolgender Gleichung 1 aus dem Wirkungsgrad des Generators, η_{Generator}, dem mechanischen Wirkungsgrad der Anordnung, η_{mechanisch}, der Turbinenleistung, P_{T}, und der Verdichterleistung, P_{V}: ${P}_{el} = {η}_{Generator} ⋅ {η}_{mechanisch} ⋅ \left({P}_{T}-{P}_{V}\right)$

Die Turbinenleistung P_{T} und die Verdichterleistung P_{V} werden aus dem Massestrom des Rauchgases vermischt mit Wasser, ṁ_{RG,W}, dem Massestrom der Verbrennungsluft, ṁ_{L}, und der Enthalpiedifferenz, Δh, zwischen verschiedenen Zuständen errechnet. Die folgenden Zustände werden dabei, wie in Fig. 4 für entsprechend bezeichnete Enthalpien h₁, h_{2,Z}, h₂, h_{2,W}, h₃ gezeigt, unterschieden:
- 0:: vor dem Verdichter 110,
- 1:: nach dem Verdichter 110 und vor der Treibstoffzufuhr 122,
- 2,W:: nach der Zündung und der Wasserzugabe 144 und vor der Turbine 150,
- 3:: nach der Turbine 150.

Für die Berechnung werden außerdem folgende weitere Zustände angenommen:
- 2,Z:: nach der Treibstoffzugabe 122 und vor der Zündung,
- 2:: nach der Zündung und vor der Wasserzugabe 144.

Damit ergibt sich für die elektrische Leistung, Pₑₗ, folgende Gleichung 2: ${P}_{el} = {η}_{Generator} ⋅ {η}_{mechanisch} ⋅ \left({\dot{m}}_{RG , W}⋅\left({h}_{2 , W}-{h}_{3}\right)-{\dot{m}}_{L}⋅\left({h}_{1}-{h}_{0}\right)\right)$

Der elektrische Wirkungsgrad, ηₑₗ, der Turbine ergibt sich aus dem Verhältnis von abgegebener elektrischer Leistung und zugeführter chemischer Leistung, gemäß Gleichung 3: ${η}_{el} = \frac{{P}_{el}}{{\dot{m}}_{Br} ⋅ {H}_{Hz}}$

Die chemische Leistung errechnet sich dabei aus dem Treibstoffmassenstrom, ṁ_{Br}, und dem Heizwert des Treibstoffs, H_{Hz}. Um den Brennstoff möglichst effektiv zu verbrennen, wird das ideale stöchiometrische Treibstoff-Luft- Verhältnis gewählt, wie es ein Gasturbinensystem der hierin vorgestellten Art gestattet: ${4 NH}_{3} + {3 O}_{2} \to {2 N}_{2} + {6 H}_{2} O$

Die Massenverhältnisse für den Brennstoff Ammoniak können aus den molaren Verhältnissen errechnet werden. Für den Brennstoff Ammoniak unter Normbedingungen (15°C, 75% Luftfeuchtigkeit) werden folgende Massenverhältnisse bestimmt (weitere, nicht genannte Luftbestandteile dabei sind vernachlässigt), gemäß Tabelle 1:

| | | | |
|---|---|---|---|
| | Luft | Brenngas | Rauchgas |

| | | | |
|---|---|---|---|
| NH₃ | 0,00% | 13,99% | 0,00% |
| H₂O | 0,78% | 0,67% | 22,89% |
| N₂ | 74,97% | 64,48% | 76,00% |
| O₂ | 22,96% | 19,75% | 0,00% |
| Ar | 1,29% | 1,11% | 1,11% |

### Verdichter.

Die Verbrennungsluft hat unter den genannten Normbedingungen eine Enthalpie h₀ = 35,2 kJ/kg. Die Enthalpie der Verbrennungsluft nach der Verdichtung, h₁, lässt sich wie folgt berechnen, Gleichung 5: ${h}_{1} = {h}_{0} + \frac{1}{{η}_{i , v}} ⋅ {c}_{p , L} ⋅ {T}_{1} ⋅ \left({\left(\frac{{P}_{2}}{{P}_{1}}\right)}^{\frac{{k}_{L} - 1}{{k}_{L}}}-1\right) = 237 , 59 \frac{kJ}{kg}$

### Darin sind:

- η_{i,v} :: isentroper Wirkungsgrad des Verdichters, angenommen als 90%,
- c_{p,L}:: Wärmekapazität der Verbrennungsluft, angenommen als 1,05 kJ/(kg·K),
- T₁:: Temperatur vor der Verdichtung, angenommen als 288,15 K,
- P₁:: Druck vor der Verdichtung, angenommen als 100 kPa,
- P₂:: Druck nach der Verdichtung, angenommen als 600 kPa,
- k_{L}:: Isentropenexponent der Luft.

Letzterer wird aus den Verhältnissen der Luftbestandteile berechnet, indem zunächst in molare Anteile umgerechnet wird, Gleichung 6, und anschließend die entsprechenden Einzelwerte angewendet werden, Gleichung 7: ${k}_{L} = \frac{\left(0,0067⋅\frac{1}{18}mol⋅{k}_{Wasserdampf}+0,6448⋅\frac{1}{14}mol⋅{k}_{{N}_{2}}+0,1975⋅\frac{1}{16}mol⋅{k}_{{O}_{2}}+0,0111⋅\frac{1}{40}mol⋅{k}_{Ar}\right)}{0 , 0067 ⋅ \frac{1}{18} mol + 0 , 6448 ⋅ \frac{1}{14} mol + 0 , 1975 ⋅ \frac{1}{16} mol + 0 , 0111 ⋅ \frac{1}{40} mol}$ ${k}_{L} = \frac{\left(0,0067⋅\frac{1}{18}mol⋅1,3+0,6448⋅\frac{1}{14}mol⋅1,36+0,1975⋅\frac{1}{16}mol⋅1,34+0,0111⋅\frac{1}{40}mol⋅1,67\right)}{0 , 0067 ⋅ \frac{1}{18} mol + 0 , 6448 ⋅ \frac{1}{14} mol + 0 , 1975 ⋅ \frac{1}{16} mol + 0 , 0111 ⋅ \frac{1}{40} mol} = 1 , 3569$

In einigen Beispielen anders als im nachfolgend fortgesetzten Rechenbeispiel wird die verdichtete Luft mittels eines Rekuperators weiter erwärmt. Dadurch wird die Enthalpie weiter erhöht: ${h}_{1 R} = {h}_{1} + {c}_{p , L} ⋅ \left({T}_{V}-{T}_{R}\right)$

### Darin sind:

- c_{p,L}:: Wärmekapazität der Verbrennungsluft, hier angenommen als 1,05 kJ/(kg·K),
- T_{V}:: Temperatur nach dem Verdichter, hier 226,27°C,
- T_{R}:: Temperatur nach dem Rekuperator, hier 226,27°C.

### Zündprozess.

Um den Zündprozess berechnen zu können, muss zunächst die Enthalpie des Brennstoffs, in diesem Fall Ammoniak, h_{A}, bestimmt werden: ${h}_{A} = 270 , 18 \frac{kJ}{kg}$

Mit den Masseanteilen von Ammoniak und Verbrennungsluft im Treibstoff-Luft-Gemisch erhält man, gemäß Gleichung 10: ${h}_{Z} = {h}_{a} ⋅ 0 , 1399 + {h}_{1 R} ⋅ 0 , 8601 = 242 , 15 \frac{kJ}{kg}$

Durch die Verbrennung wird die Enthalpie weiter erhöht, Gleichung 11: ${h}_{2} = {h}_{Z} + {H}_{Br} ⋅ 0 , 1399 = 3389 , 90 \frac{kJ}{kg}$

Darin bedeutet H_{Br} den Heizwert von Ammoniak, 22300 kJ/kg.

Es wird angenommen, dass durch die Zündung der Ammoniak vollständig verbrannt wird. Dadurch setzt sich der Massestrom des Rauchgases, ṁ_{RG}, wie folgt zusammen:

| | |
|---|---|
| H₂O: | 22,89% |
| N₂: | 76,00% |
| Ar: | 1,11% |

Die Verbrennungstemperatur t₂ = T₂ - 273,15 K lässt sich berechnen durch: ${h}_{2} = {h}_{{H}_{2} O} + {h}_{{N}_{2}} + {h}_{Ar} = {c}_{{H}_{2} O} ⋅ {t}_{2} + {c}_{{N}_{2}} ⋅ {t}_{2} + {c}_{Ar} ⋅ {t}_{2}$

Durch den Überdruck liegt die Siedetemperatur des Wassers bei 159°C. Die Enthalpie des Wasserdampfs am Siedepunkt beträgt 2757 kJ/kg. Dies muss entsprechend berücksichtigt werden.

Die Verbrennungstemperatur ist durch das stöchiometrische Treibstoff-Luft- Verhältnis übermäßig hoch (rechnerisch ca. 2350°C). Daher muss das Rauchgas umgehend gekühlt werden, um das Turbinen- sowie gegebenenfalls das Brennkammermaterial nicht zu beschädigen. Zur Kühlung wird Wasserdampf dem Rauchgasstrom beigemischt.

### Wassereinspritzung.

Im vorliegenden Beispiel wird Dampf mit einer Temperatur t_{W} = 163°C und zusätzlich flüssiges Wasser mit einer Temperatur von 100°C in das Rauchgas eingespritzt. Es muss so viel Wasser (einschließlich Dampf) eingespritzt werden, dass die Temperatur des Wasser-Rauchgas-Gemischs die Arbeitstemperatur der Turbine nicht übersteigt, t_{RG,W} < t_{Tmax} = 500°C. Die Temperatur des Abgases sollte signifikant über der Temperatur des Einspritzwassers liegen. Computerberechnung für Variation der Wassermenge zum Bestimmen des in Bezug auf die gewählten Parameter optimierten Wirkungsgrads in Abhängigkeit von der Wassermenge für das vorliegende Beispiel hat für die Wassereinspritzung einen optimalen Masseanteil von w = 45% Einspritzwasser gegenüber Rauchgas ergeben. Dieser Masseanteil w setzt sich zusammen aus einem Anteil flüssigen Wassers w', der hier als 89% angenommen ist, und einem Anteil Dampfs d, der hier als 11% angenommen ist. Dies ist nachfolgend anhand von Fig. 5 näher beschrieben. Daraus folgt die Enthalpie des Rauchgas-Wasser-Gemischs h_{2,W}, gemäß Gleichung 13: ${h}_{2 , W} = {h}_{2} ⋅ \left(1-w\right) + {h}_{W} ⋅ w ,$ sowie mit, Gleichung 14: ${h}_{W} = d ⋅ \left(2757\frac{kJ}{kg}+\left({t}_{W}-163°C\right)⋅1,89\frac{kJ}{kg ⋅ K}\right) + w ′ ⋅ \left(4,19\frac{kJ}{kg ⋅ K}⋅100K\right) = 676 , 98 \frac{kJ}{kg}$ (Temperatur des Dampfs zur Eindüsung hier angenommen als 163°C, Temperatur des flüssigen Wassers zur Eindüsung hier angenommen als 100°C, Druck zur Eindüsung hier angenommen als 600 kPa) als, Gleichung 15: ${h}_{2 , W} = {h}_{2} + w ⋅ \left({h}_{W}-{h}_{2}\right) = 2169 , 08 \frac{kJ}{kg}$

Nach der Wasserzugabe verringert sich die Temperatur entsprechend. Die Turbineneintrittstemperatur wird gesenkt, der Massestrom erhöht, Gleichungen 16 und 17: $\begin{matrix}{h}_{2 , W} = \left(w+\left(1-w\right)⋅0,2289\right) ⋅ \left(2757\frac{kJ}{kg}+1,89\frac{kJ}{kg}\left({t}_{2 , W}-159°C\right)\right) + \left(1-w\right) ⋅ \\ \left(1-0,2289\right) ⋅ \left(0,76⋅1,009\frac{kJ}{kg ⋅ K}⋅{t}_{2 , W}+0,0111⋅0,524\frac{kJ}{kg ⋅ K}⋅{t}_{2 , W}\right) ,\end{matrix}$ ${t}_{2 , W} = 498 , 50 ° C ,$

Die Turbineneintrittstemperatur von 498,50°C folgt dabei aus der für das jeweilige Turbinenmaterial maximalen Turbineneintrittstemperatur. Zudem entspricht die Turbineneintrittstemperatur der aus dem Abgasstrom zurückgewinnbaren Wärme zum Vorwärmen derjenigen Wassermenge, die dem Gasstrom für die so bestimmte Turbineneintrittstemperatur zuzuführen ist, auf die vorstehend genannte Einspritztemperatur des Wassers. Dies ergibt sich ferner aus dem Nachfolgenden.

### Turbine.

Aufgrund der hohen Temperatur des Rauchgas-Wasser-Gemischs kann angenommen werden, dass sich der überkritische Wasserdampf näherungsweise wie ein ideales Gas verhält. Daher folgt für die Enthalpie nach der Turbine, h₃, Gleichung 18: ${h}_{3} = {h}_{2 , W} - {η}_{T} ⋅ {c}_{P , RG , W} ⋅ {T}_{2 , W} ⋅ \left(1-{\left(\frac{{P}_{1}}{{P}_{2}}\right)}^{\frac{{k}_{RG , W} - 1}{{k}_{RG , W}}}\right)$

### Darin sind:

- η_{T}:: isentroper Wirkungsgrad der Turbine, angenommen als 90%,
- c_{P,RG,W}:: Wärmekapazität des Rauchgas-Luft-Gemischs, aus den Masseanteilen berechnet,
- K_{RG,W}:: Isentropenexponent des Rauchgas-Luft-Gemischs, aus den Masseanteilen berechnet, indem zunächst in molare Anteile umgerechnet wird.

Mit Gleichung 19: $\begin{matrix}{c}_{P , RG , W} = \left(w+\left(1-w\right)⋅0,2289\right) ⋅ 1 , 89 \frac{kJ}{kg ⋅ K} + \left(1-w\right) ⋅ \left(1-0,2289\right) ⋅ \\ \left(0,76⋅1,009\frac{kJ}{kg ⋅ K}+0,0111⋅0,524\frac{kJ}{kg ⋅ K}\right) = 1 , 716 \frac{kJ}{kg ⋅ K} ,\end{matrix}$ und Gleichung 20: $\begin{matrix}{k}_{RG , W} = \\ \frac{\left(\left(w+\left(1-w\right)⋅0,2289\right)⋅\frac{1}{18}mol⋅{k}_{Wasserdampf}+\left(1-w\right)⋅\left(1-0,2289\right)⋅\left(0,76⋅\frac{1}{14}mol⋅{k}_{{N}_{2}}+0,0111⋅\frac{1}{40}mol⋅{k}_{Ar}\right)\right)}{\left(w+\left(1-w\right)⋅0,2289\right) ⋅ \frac{1}{18} mol + \left(1-w\right) ⋅ \left(1-0,2289\right) ⋅ \left(0,76⋅\frac{1}{14}mol+0,0111⋅\frac{1}{40}mol\right)} = \\ 1 , 3146\end{matrix}$ folgt, Gleichung 21: ${h}_{3} = 1794 , 74 \frac{kJ}{kg}$

Nach dem Passieren der Turbine ist die Enthalpie entsprechend verringert und die Temperatur gesenkt. Die Temperatur des Abgases kann analog zur Temperatur vor der Turbine ermittelt werden. Jedoch muss beachtet werden, dass auf Grund des verringerten Drucks die Verdampfungstemperatur jetzt bei 100°C liegt, Gleichungen 22 und 23: $\begin{matrix}{h}_{3} = \left(w+\left(1-w\right)⋅0,2289\right) ⋅ \left(2677\frac{kJ}{kg}+1,89\frac{kJ}{kg ⋅ K}\left({t}_{3}-100°C\right)\right) + \left(1-w\right) ⋅ \\ \left(1-0,2289\right) ⋅ \left(0,76⋅1,009\frac{kJ}{kg ⋅ K}{t}_{3}+0,0111⋅0,524\frac{kJ}{kg ⋅ K}⋅{t}_{3}\right) ,\end{matrix}$ ${t}_{3} = 239 , 88 ° C$

Berechnung des Wirkungsgrads.

Der Wirkungsgrad kann wie in Gleichung 3 berechnet werden. Für die Berechnung müssen die Massenströme ṁ_{BR}, ṁ_{L} und ṁ_{RG,W} in Abhängigkeit von ṁ_{L} gestellt werden: ${\dot{m}}_{BR} = 0 , 1626 ⋅ {\dot{m}}_{L}$ ${\dot{m}}_{RG , W} = \left({\dot{m}}_{BR}+{\dot{m}}_{L}\right) ⋅ \left(1+w/\left(1-w\right)\right)$

Außerdem wird angenommen, für Gleichungen 24 und 25: ${η}_{Generator} = 1$ ${η}_{mechanisch} = 1$ ${η}_{el} = \frac{{η}_{Generator} ⋅ {η}_{mechanisch} ⋅ \left({\dot{m}}_{RG , W}⋅\left({h}_{2 , W}-{h}_{3}\right)-{\dot{m}}_{L}⋅\left({h}_{1}-{h}_{0}\right)\right)}{{\dot{m}}_{Br} ⋅ {H}_{Br}}$ ${η}_{el} = {η}_{Generator} ⋅ {η}_{mechanisch} ⋅ \frac{\left(1,1626⋅\left(1+\frac{w}{\left(1-w\right)}\right)⋅\left({h}_{2 , W}-{h}_{3}\right)-\left({h}_{1}-{h}_{0}\right)\right)}{0 , 1626 ⋅ {H}_{Br}} = 19 , 47 %$

### Abgas.

Nachdem das Abgas die Turbine mit der Enthalpie h₃ verlassen hat, wird ihm durch einen Wärmetauscher weitere Energie entzogen. Diese wird benötigt, um das Einspritzwasser aufzuheizen, das Ammoniak zu verdampfen und auf Einspritztemperatur zu erhitzen. Danach ist die Enthalpie des Abgases auf h4 (in Fig. 4 nicht dargestellt) gesunken, Gleichungen 26 und 27: $\begin{matrix}{h}_{4} = {h}_{3} - \left(\begin{matrix}w ⋅ d ⋅ \left(\left(2757-67\right)\frac{kJ}{kg}+1,89\frac{kJ}{kg ⋅ K}⋅\left({t}_{W}-159°C\right)\right) + w ⋅ w ′ ⋅ 4 , 19 \frac{kJ}{kg ⋅ K} ⋅ \\ 100 K + \left(1-w\right) ⋅ 0 , 1399 ⋅ \left({h}_{A}-269\frac{kJ}{kg}\right) + \left(1-w\right) ⋅ 0 , 8601 ⋅ \left({h}_{1 R}-{h}_{1}\right) 0\end{matrix}\right) = \\ 125 , 39 \frac{kJ}{kg}\end{matrix}$ ${t}_{4} = \frac{{h}_{4}}{4 , 19 ⋅ \left(w+\left(1-w\right)⋅0,2289\right) + \left(1-w\right) ⋅ \left(1-0,2289\right) ⋅ \left(0,76⋅1,009+0,0111⋅0,524\right)} = 44 , 18 ° C$

Fig. 5 zeigt mit Bezug auf die voranstehende Berechnung die Abhängigkeit des höchsten erzielbaren Wirkungsgrads, η (in Prozent), von der eingeleiteten Wassermenge, W (angegeben als der Wasseranteil im Rauchgas in Prozent), und dem in der eingeleiteten Wassermenge W anteilig enthalten Dampf, V (in Prozent bezogen auf die Wassermenge), infolge des Vorwärmens der Wassermenge mit zurückgewinnbarer Abgaswärme. Eine gegebene Menge zurückgewinnbarer Wärme kann unterschiedlich auf Teilmengen der Wassermenge W verteilt werden, sodass ein dabei verdampfter Anteil V variabel ist.

Ein minimal erforderlicher Wasseranteil von ca. 43% folgt im vorliegenden Beispiel einerseits aus der bei stöchiometrischem Gemisch erfolgenden Überhitzung der Turbine über die kritische Temperatur, die hier als 500°C angenommen ist, und der Mindesttemperatur von flüssigem Wasser von 0°C. Der Siedepunkt des Einspritzwassers beträgt zudem bei dem angenommenen Einspritzdruck, der im vorliegenden Beispiel zum Zweck einer optimierten Einspritzung genauso so hoch gewählt ist wie der Druck in der Brennkammer, etwa 163°C. Die nachfolgenden Erläuterungen zu Fig. 5 gelten analog bei einem Betrieb des Gasturbinensystems mit hiervon abweichenden Betriebsparametern.

Die senkrechten stabförmigen Balken in Fig. 5 entsprechen Wirkungsgradbereichen, die bei einem jeweils gegebenen Paar aus Wasseranteil und Dampfanteil durch unterschiedliche Temperaturen des verdampften und des nicht verdampften Anteils des Wassers, d.h. durch unterschiedliches Aufteilen der verfügbaren Wärme auf den zu verdampfenden und den nicht zu verdampfenden Anteil des Wassers, erzielbar sind. Zwischen jeweils benachbarten Balken in dem Diagramm entspricht die Richtung dichtester Nachbarschaft der Richtung des veränderlichen Wasseranteils W. Wie zudem durch die Lote auf die Grundfläche unter einigen der Balken erkennbar, sind Sätze von zumeist sechs Balken gleichen Dampfanteils V gezeigt. Diese Sätze sind in Schritten entsprechend 1 Prozent des veränderlichen Dampfanteils V beabstandet. In jedem der Sätze sind die einzelnen Balken in Schritten entsprechend 0,1 Prozent des veränderlichen Wasseranteils W beabstandet. Ein Lot ist jeweils unter dem längsten Balken eines Satzes eingezeichnet. Wie durch die Projektion der Balken auf die Seitenfläche des Diagramms erkennbar ist, entspricht der längste Balken in jedem Satz zugleich dem höchsten erzielbaren Wirkungsgrad η in dem jeweiligen Satz.

Der Wirkungsgrad η ist beeinflusst durch die zum Vorwärmen des Wassers auf die jeweiligen Einleittemperaturen verwendete und damit zurückgewinnbare Abgaswärme. Ein zunehmender Wasseranteil gestattet eine ausreichende Kühlung auch bei höherer Wassereinleittemperatur und damit einen höheren Anteil zurückgewinnbarer Abgaswärme. Der erzielbare höchste Wirkungsgrad η steigt daher, wie in Fig. 5 erkennbar, allgemein mit steigenden Wasser- und Dampfanteilen. Eine Begrenzung der steigenden Anteile von Wasser W und Dampf V nach oben ergibt sich aus der durch den Verbrennungsprozess und durch Wärmerückgewinnung insgesamt vorhandenen Wärmemenge.

Eine zum Vorwärmen des Treibstoffs zurückgewonnene und verwendete Abgaswärme ist in dem gezeigten Beispiel berücksichtigt. In anderen Beispielen der Erfindung wird der Treibstoff abweichend davon wenigstens teilweise mit nicht zurückgewonnener, beispielsweise elektrisch erzeugter Wärme vorgewärmt, oder nicht vorgewärmt. Die vorliegenden Erläuterungen zu Fig. 5 gelten in solchen Fällen analog.

Das Balkenfeld ist in Richtung zunehmenden Dampfanteils V für jeden gegebenen Wasseranteil W durch die Höchstmenge des Wassers begrenzt, die sich mittels der jeweils zurückgewinnbaren Wärme verdampfen lässt. Eine restliche Wärme lässt sich beispielsweise zum Vorwärmen, wenn auch nicht zum Verdampfen, der restlichen Wassermenge und/oder des Treibstoffs verwenden. Restwärme, die beispielsweise aufgrund thermodynamischer Beschränkungen, insbesondere wegen der vorliegenden Temperaturdifferenzen, nicht mehr wirksam dem Prozess zugeführt werden kann, ist anderweitig verwendbar.

Wie in Fig. 5 aus der Projektion sämtlicher Balken auf die Seitenfläche erkennbar ist, erfolgt in Richtung zunehmenden Dampfanteils V allgemein ein Anstieg des erzielbaren Wirkungsgrads η. Der Wirkungsgrad η im Bereich des Balkenfelds ist außerdem höher, als wenn keine oder nur weniger Verdampfung beim Vorwärmen der jeweiligen Wassermenge W mittels der zurückgewinnbaren Wärme erfolgt, etwa wenn die zurückgewinnbare Wärme gleichmäßig auf die (für eine vollständige Verdampfung zu große) Wassermenge W verteilt wird.

Für einen gegebenen Wasseranteil W fällt der höchste erzielbare Wirkungsgrad η normalerweise nicht mit dem scheinbaren Grat der Einhüllenden des Balkenfelds zusammen, dessen Verlauf in Fig. 5 durch die oberen Enden der jeweils längsten Balken der verschiedenen Sätze von Balken für verschiedene Dampfanteile V suggeriert ist. Der Anschein eines solchen Grats der Einhüllenden ergibt sich in Fig.5 lediglich aus dem größeren Abstand zwischen benachbarten Sätzen von Balken im Verhältnis zu benachbarten Balken jedes Satzes und aus der Ausrichtung der Sätze parallel zur Richtung des veränderlichen Wasseranteils W. Das ist in Fig. 5 anhand von zwei Punktketten in dem Balkenfeld und ihren Projektionen auf die Seitenfläche des Diagramms beispielhaft veranschaulicht, wie nachfolgend näher beschrieben wird.

Die obere der beiden Punktketten verläuft auf der Einhüllenden des Balkenfelds entsprechend einem veränderlichen Dampfanteil V für einen gegebenen (konstanten) Wasseranteil von 45,0 %. Aus der Projektion dieser Punktkette auf die Seitenfläche des Diagramms ist ersichtlich, dass der erzielbare Wirkungsgrad η bei steigendem Dampfanteil V auch nach einem Überschreiten des voranstehend beschriebenen scheinbaren Grats der Einhüllenden, der hier bei etwa η = 19,5 % verläuft, noch weiter ansteigt. Der höchste Wirkungsgrad η ist stattdessen dann erzielbar, wenn die größtmögliche Menge an Wasser V aus dem Wasseranteil W verdampft wird, d.h. wenn die zurückgewinnbare Wärme derart auf verschiedene Teilmengen des Wasseranteils W verteilt wird, dass die dabei verdampfte Menge (V) an Wasser maximal ist. Dabei ist der höchste Wirkungsgrad η ferner dann erzielbar, wenn der übrige Teil der zurückgewinnbaren Wärme zum Vorwärmen des übrigen, nicht verdampften Teils des Wassers (W) und/oder des Treibstoffs verwendet wird, beispielsweise, soweit eine solche Verwendung im Rahmen thermodynamischer Beschränkungen (bedingt durch vorhandene Temperaturdifferenzen, etc.) möglich ist.

Die untere der beiden Punktketten verläuft auf der Einhüllenden des Balkenfelds entsprechend einem veränderlichen Dampfanteil V für einen gegebenen (konstanten) Wasseranteil von 43,5 %. Das voranstehend anhand der oberen Punktkette Beschriebene gilt erkennbar auch für die untere Punktkette und ihre Projektion auf die Seitenfläche des Diagramms. Insbesondere ist auch bei dem Wasseranteil W von 43,5 % der höchste Wirkungsgrad η erzielbar, wenn die zurückgewinnbare Wärme derart auf Teilmengen des Wasseranteils W aufgeteilt wird, dass die dabei verdampfte Menge (V) an Wasser maximal ist.

Wie voranstehend beschrieben, ist ein höchster Wirkungsgrad der Gasturbine 102 ermöglicht bei der Verwendung von ausschließlich rückgewonnener Abgaswärme zum Vorwärmen der verwendeten Wassermenge derart, dass eine möglichst große Teilmenge des Wassers durch das Vorwärmen verdampft wird. Die Vorteile der Erfindung, die einen effizienten Betrieb von Gasturbinen besonders bei niedrigen kritischen Temperaturen begünstigt, sind jedoch auch unter abweichenden Betriebszuständen der Gasturbine 102 erzielbar. Wie in Fig. 5 zu erkennen, kann von einem Verdampfen einer größtmöglichen Teilmenge des Wassers abgewichen werden, beispielsweise durch ein abweichendes Verteilen zurückgewinnbarer Wärme auf die zu verdampfende und die nicht zu verdampfende Teilmenge, durch Abweichen von der idealen Wassermenge W für eine gegebene kritische Temperatur und eine zurückgewinnbare Wärme, etc., etwa wenn Gegebenheiten bei der Umsetzung oder der Verwendung der Gasturbine das erfordern, wobei trotzdem ein vorteilhafter Wirkungsgrad η, insbesondere gegenüber herkömmlichen Turbinen, erzielbar ist. Das gestattet ein Optimieren des Wirkungsgrads, je nach Umständen bzw. weiteren Anforderungen betreffend eine Konstruktion und/oder einen Betrieb der Gasturbine 102, wobei stets ein Vorteil gegenüber herkömmlichen Gasturbinen in Bezug auf den Wirkungsgrad erzielbar ist. Auch solche Abweichungen, etwa zum Zweck einer individuellen Optimierung unter gegebenen Konstruktions- und/oder Betriebsbedingungen, erfolgen dabei jedoch unter der Maßgabe, insbesondere als Optimierung unter Verwendung der Gesetzmäßigkeit, dass ein höchster Wirkungsgrad erzielbar ist, wenn die verfügbare Wärmemenge zum Verdampfen eines möglichst großen Anteils der Wassermenge verwendet wird und ein Rest der verfügbaren Wärmemenge zum Vorwärmen eines restlichen Anteils der Wassermenge und/oder des Treibstoffs für die Gasturbine verwendet wird.

In vorteilhaften Beispielen der Gasturbinensysteme wie im Zusammenhang mit Fig. 1 bis 5 beschrieben ist die Steuerungseinheit 190 demnach dazu ausgebildet, die Wassereinleitvorrichtung auf Grundlage der voranstehenden Gesetzmäßigkeiten entsprechend einem optimalen, beispielsweise einem maximal erzielbaren, Wirkungsgrad zu steuern.

Das anhand der Fig. 5 beschriebene Beispiel betrifft einen Betrieb des vorgestellten Gasturbinensystems mit einem für maximalen Wirkungsgrad besonders vorteilhaften stöchiometrischen Treibstoff-Luft-Gemisch, einer mit Blick auf eine Schadstoffentwicklung vorteilhaften Verwendung von Ammoniak als Brennstoff, und mit für Turbinen typischen Druckverhältnissen. Es versteht sich jedoch, dass die voranstehend beschriebenen Vorteile in analoger Weise auch unter hiervon abweichenden Betriebsbedingungen wenigstens teilweise erzielbar sind. Dies gilt beispielsweise bei der Verwendung eines anderen Treibstoffs, eines abweichenden Brennkammerdrucks und/oder eines abweichenden Treibstoff-Luft-Gemischs, dessen Verwendung herkömmlich zu einer Überhitzung der Turbine führen würde.

## Patentansprüche

1. Gasturbinensystem (100) umfassend:
- eine Gasturbine (102) umfassend:
o wenigstens ein Turbinenrad (152);
o wenigstens eine Brennkammer (120), die zum Verbrennen eines Treibstoff-Luft-Gemischs in der Brennkammer vorgesehen ist und die mit dem Turbinenrad (152) fluidisch verbunden ist zum Leiten eines Gasstroms aus der Brennkammer (120) zu dem Turbinenrad (152), und
∘ eine Wassereinleitvorrichtung (140, 142, 144), die dazu ausgebildet ist, dem Gasstrom Wasser hinzuzufügen, und
- eine Steuerungseinheit (190), die dazu ausgebildet ist, eine Wassermenge zu steuern, die dem Gasstrom mittels der Wassereinleitvorrichtung (140, 142, 144) hinzugefügt wird,
**dadurch gekennzeichnet, dass**
- die Wassereinleitvorrichtung (140, 142, 144) ferner dazu ausgebildet ist, unter Verwenden einer in dem Gasturbinensystem (100) verfügbaren Wärmemenge wenigstens einen Teil der Wassermenge vorzuwärmen, bevor die Wassermenge dem Gasstrom hinzugefügt wird, und
- die Steuerungseinheit (190) ferner dazu ausgebildet ist, die Wassereinleitvorrichtung (140, 142, 144) so zu steuern, dass ein Vorwärmen wenigstens des Teils der Wassermenge optimiert ist unter der Maßgabe, dass ein höchster Wirkungsgrad der Gasturbine (102) erzielbar ist, wenn die verfügbare Wärmemenge zum Verdampfen eines möglichst großen Anteils der Wassermenge verwendet wird und ein Rest der verfügbaren Wärmemenge zum Vorwärmen eines restlichen Anteils der Wassermenge und/oder des Treibstoffs für die Gasturbine (102) verwendet wird.

2. Gasturbinensystem gemäß Anspruch 1, **dadurch gekennzeichnet, dass** das Vorwärmen wenigstens des Teils der Wassermenge optimiert ist unter der zusätzlichen Maßgabe, dass der höchste Wirkungsgrad der Gasturbine (102) erzielbar ist, wenn der Rest der verfügbaren Wärmemenge nur dann zum Vorwärmen des Treibstoffs für die Gasturbine (102) verwendet wird, wenn ein restlicher Anteil der Wassermenge nicht vorliegt.

3. Gasturbinensystem gemäß Anspruch 1 oder Anspruch 2, **dadurch gekennzeichnet, dass** die verfügbare Wärmemenge wenigstens teilweise, insbesondere vollständig, aus rückgewinnbarer und/oder rückgewonnener Abgaswärme der Gasturbine (102) besteht.

4. Gasturbinensystem gemäß einem der vorhergehenden Ansprüche, **dadurch gekennzeichnet, dass** die Gasturbine (102) dazu ausgebildet ist, in wenigstens einer vorgesehenen Betriebsart mit einem, insbesondere wenigstens annähernd stöchiometrischen, Treibstoff-Luft-Gemisch betrieben zu werden, das so beschaffen ist, dass der dadurch erzeugte Gasstrom eine Temperatur aufweist, die geeignet ist, im Bereich des Turbinenrads (152) eine Temperatur zu verursachen, die größer ist als eine kritische Temperatur des Turbinenrads (152), und die Steuerungseinheit (190) dazu ausgebildet ist, die Wassermenge derart zu steuern, dass eine Temperatur des dadurch erzeugten Wasser-Gasgemischs im Bereich des Turbinenrads (152) kleiner ist als die kritische Temperatur des Turbinenrads (152),

5. Gasturbinensystem gemäß einem der vorhergehenden Ansprüche, **dadurch gekennzeichnet, dass** ein Wassereinleitbereich der Wassereinleitvorrichtung (140, 142, 144) in Bezug auf die Brennkammer (120) derart angeordnet ist, dass der Gasstrom in dem Wassereinleitbereich wenigstens annähernd keine brennenden Anteile des Treibstoff-Luft-Gemischs mehr enthält.

6. Gasturbinensystem gemäß einem der vorhergehenden Ansprüche, **gekennzeichnet durch** wenigstens einen Sensor (160), der dazu ausgebildet ist, wenigstens eine Messgröße zu erfassen, die auf die in dem Gasturbinensystem (100) verfügbare Wärmemenge, insbesondere eine rückgewonnene und/oder rückgewinnbare Abgaswärme der Gasturbine (102), hinweist.

7. Gasturbinensystem gemäß Anspruch 6, **dadurch gekennzeichnet, dass** die Steuerungseinheit (190) dazu ausgebildet ist, einen zum Verdampfen vorgesehenen Anteil der Wassermenge wenigstens teilweise auf der Grundlage der erfassten Messgröße, die auf die verfügbare Wärmemenge hinweist, zu steuern.

8. Gasturbinensystem gemäß einem der vorhergehenden Ansprüche, **gekennzeichnet durch** wenigstens einen Sensor (160), der dazu ausgebildet ist, wenigstens eine Messgröße zu erfassen, die auf eine Temperatur im Bereich des Turbinenrads (152) hinweist, wobei die Steuerungseinheit (190) dazu ausgebildet ist, die Wassermenge wenigstens teilweise auf der Grundlage der erfassten Messgröße, die auf die Temperatur im Bereich des Turbinenrads (152) hinweist, zu steuern.

9. Gasturbinensystem gemäß Anspruch 8, **dadurch gekennzeichnet, dass** der wenigstens eine Sensor (160) einen Temperatursensor umfasst, der im Bereich des Turbinenrads (152) angeordnet ist, und die Steuerungseinheit (190) dazu ausgebildet ist, die Wassermenge wenigstens teilweise auf der Grundlage einer mittels des Temperatursensors erfassten Temperatur zu steuern.

10. Gasturbinensystem gemäß einem der vorhergehenden Ansprüche, **dadurch gekennzeichnet, dass** die Steuerungseinheit (190) dazu ausgebildet ist, die Wassermenge ferner wenigstens teilweise auf der Grundlage eines Treibstoffdurchsatzes der Gasturbine (102), eines Mischungsverhältnisses des Treibstoff-Luft-Gemischs und/oder eines Drucks zu steuern.

11. Gasturbinensystem gemäß einem der vorhergehenden Ansprüche, **dadurch gekennzeichnet, dass** die Steuerungseinheit (190) dazu ausgebildet ist, die Wassermenge ferner derart zu steuern, dass ein Wirkungsgrad der Gasturbine in Abhängigkeit von der Wassermenge maximal ist mit der Bedingung, dass im Bereich des Turbinenrads (152) eine kritische Temperatur des Turbinenrads (152) nicht überschritten wird.

12. Gasturbinensystem gemäß einem der vorhergehenden Ansprüche, **gekennzeichnet durch** wenigstens einen elektrischen Generator, wobei die Gasturbine (102) zum Betreiben des elektrischen Generators angeordnet ist.

13. Verfahren (300) zum Betreiben eines Gasturbinensystems, das eine Gasturbine und eine Steuerungseinheit umfasst, wobei die Gasturbine wenigstens ein Turbinenrad, wenigstens eine Brennkammer, die zum Verbrennen eines Treibstoff-Luft-Gemischs in der Brennkammer vorgesehen ist und die mit dem Turbinenrad fluidisch verbunden ist zum Leiten eines Gasstroms aus der Brennkammer zu dem Turbinenrad, und eine Wassereinleitvorrichtung, die dazu ausgebildet ist, dem Gasstrom Wasser hinzuzufügen, umfasst, und wobei die Steuerungseinheit dazu ausgebildet ist, eine Wassermenge zu steuern, die dem Gasstrom mittels der Wassereinleitvorrichtung hinzugefügt wird,
wobei das Verfahren umfasst:
Empfangen (310), mittels der Steuerungseinheit, wenigstens eines Eingangssignals, das auf eine in dem Gasturbinensystem verfügbare und zum Vorwärmen wenigstens eines Teils der Wassermenge verwendbare Wärmemenge hinweist;
Erzeugen (320), mittels der Steuerungseinheit, eines Steuersignals zum Steuern der Wassereinleitvorrichtung derart, dass ein Vorwärmen wenigstens des Teils der Wassermenge mittels der Wassereinleitvorrichtung optimiert ist unter der Maßgabe, dass ein höchster Wirkungsgrad der Gasturbine erzielbar ist, wenn die verfügbare Wärmemenge zum Verdampfen eines möglichst großen Anteils der Wassermenge verwendet wird und ein Rest der verfügbaren Wärmemenge zum Vorwärmen eines restlichen Anteils der Wassermenge und/oder des Treibstoffs für die Gasturbine verwendet wird, und
Ausgeben (330), mittels der Steuerungseinheit, des Steuersignals an die Wassereinleitvorrichtung.

14. Computerprogrammprodukt umfassend Teile von Programmcode, die, wenn sie auf einer Prozessoreinrichtung einer Steuerungseinheit eines Gasturbinensystems ausgeführt werden, die Steuerungseinheit zum Durchführen des Verfahrens gemäß Anspruch 13 konfigurieren.
